## Europäisches Patentamt
## European Patent Office
## Office européen des brevets

(11) Publication number: **0 114 439**
**B1**

# EUROPEAN PATENT SPECIFICATION

(45) Date of publication of patent specification: **23.11.88**

(51) Int. Cl.⁴: **G 02 B 5/26, G 02 B 6/10**

(21) Application number: **83201800.6**

(22) Date of filing: **15.12.83**

(54) **Monomode optical transmission fibre having a tapered end portion and method of manufacturing such a fibre.**

(30) Priority: **23.12.82 NL 8204961**

(43) Date of publication of application:
**01.08.84 Bulletin 84/31**

(45) Publication of the grant of the patent:
**23.11.88 Bulletin 88/47**

(84) Designated Contracting States:
**DE FR GB IT NL SE**

(56) References cited:
**EP-A-0 025 728
DE-A-2 630 632
DE-B-2 135 254
FR-A-2 320 564
JP-A-54 020 747
NL-A-7 706 379
US-A-4 193 663**

**APPLIED OPTICS, vol. 19, no. 15, 1st August 1980, pages 2578-2583; H. KUWAHARA et al.: "Efficient coupling from semiconductor lasers into single-mode fibers with tapered hemispherical ends".
ELECTRONICS LETTERS, vol. 16, no. 9, 24th April 1980; YASUJI MURAKAMI et al.: "Microlens tipped on a single-mode fibre end for InGaAsP laser coupling improvement".**

(73) Proprietor: **N.V. Philips' Gloeilampenfabrieken
Groenewoudseweg 1
NL-5621 BA Eindhoven (NL)**

(72) Inventor: **Khoe, Giok Djan
c/o INT. OCTROOIBUREAU B.V. Prof. Holstlaan 6
NL-5656 AA Eindhoven (NL)**
Inventor: **Poulissen, Josephus H.F.M.
c/o INT. OCTROOIBUREAU B.V. Prof. Holstlaan 6
NL-5656 AA Eindhoven (NL)**
Inventor: **De Vrieze, Henricus Maria
c/o INT. OCTROOIBUREAU B.V. Prof. Holstlaan 6
NL-5656 AA Eindhoven (NL)**

(74) Representative: **Cobben, Louis Marie Hubert et al
INTERNATIONAAL OCTROOIBUREAU B.V. Prof. Holstlaan 6
NL-5656 AA Eindhoven (NL)**

Courier Press, Leamington Spa, England.

**Description**

This invention relates to a monomode optical transmission fibre having at one of its ends a conical taper with continuously decreasing cross section, comprising a tapered core surrounded by a tapered cladding. The invention also relates to a method of manufacturing such a transmission fibre.

Such a transmission fibre and method are described in the article: "Efficient coupling from semiconductor lasers into single-mode fibres with tapered hemispherical ends" in "Applied Optics", Vol. 19, No. 15, August 1980, pages 2578—2583. The tapered end portion of the transmission fibre described in said article has a rounded top with a radius of curvature of approximately 25 μm. This top acts as a lens. As is described in said article transmission fibres having a tapered core and cladding end portion (with a rounded top), as compared with transmission fibres having a straight and flat end portion, have substantially better properties as regards the coupling efficiency, permissible misalignment of the fibre relative to the radiation source in the form of a diode laser, and the feedback of radiation to the radiation source as a result of reflections inside the fibre.

The coupling efficiency is to be understood to mean the ratio of the radiation intensity received from the source by the transmission fibre to the total radiation intensity emitted by this source.

As a result of the feedback effect a part of the radiation emitted by the diode laser may return into the laser. The fed-back radiation may give rise to an undesirable modulation of the radiation intensity emitted by the diode laser.

The coupling efficiency attainable by means of a tapered monomode transmission fibre with rounded top, which is approximately 25 to 30%, is higher than that of a transmission fibre with a straight and flat end portion but is inadequate for practical purposes. The cause of this resides in the fact that the refractive index of the fibre end portion is comparatively low, namely equal to that of the fibre core, so that the lens formed by this end portion has a comparatively low numerical aperture and exhibits comparatively large spherical aberrations.

It is the object of the present invention to provide a substantial improvement in coupling efficiency of a tapered monomode transmission fibre. According to the invention the transmission fibre is characterized in that the length of the tapered end portion is of the order of magnitude of the diameter of the non-tapered fibre portion and that on top of the taper is deposited a lens element having a spherical top surface and comprising a transparent material with a refractive index higher than that of the transmission fibre core.

A transmission fibre with a rather short taper has a better coupling efficiency than a transmission fibre whose tapered end portion is substantially longer, such as the transmission fibre described in the said article in "Applied Optics", Vol. 19, No. 15, pages 2578—2583 (where the length of the tapered end portion is of the order of 400 to 800 μm). The above-defined high-index material forms besides a lens whose numerical aperture is substantially higher than that of the known transmission fibre with a tapered end portion.

It is to be noted that it is known *per se* from EP—A—0 025 728 and from DE—A—25 35 161 to provide a transmission fibre with a lens in the form of a homogeneous and transparent material with a spherical surface. However, the cores of the transmission fibres disclosed in said European and German Patent Applications do not have tapered end portions, so that these transmission fibres do not combine the advantage of a lens arranged on the fibre end with the advantages of a tapered core. Moreover, DE—A—25 35 161 does not state that the refractive index of the additional material deposited on the fibre end portion must be greater than that of the fibre core. Finally, both EP—A—0 025 728 and the DE—A—25 35 161 relate to multimode transmission fibres and not to monomode fibres.

It is also to be noted that it is known *per se* from the Article "Microlens tipped on a single-mode fibre end for InGaAsP laser coupling improvement", in "Electronics Letters", Vol. 16, No. 9, 24th April 1980, pages 321—322, to deposit a lens on a monomode fibre. However, the transmission fibre in said Article is not tapered and the use of a high index lens is not mentioned.

In "Patent Abstracts of Japan", Vol. 3, No. 41 (E-103), (1979), page 55, Kokai No. 54-20747, a fibre end is shown of which the cladding has been removed, the core is tapered with its end shaped into a spherical form. This lens has the same index of refraction as the fibre core and the end portion of the fibre where the core is tapered has no cladding.

A preferred embodiment of the monomode transmission fibre of the present invention is further characterized in that the lens material is glass.

The lens on the transmission fibre end may be of a homogeneous glass. Preferably, this lens is then further characterized in that an anti-reflection coating is deposited on the lens outer surface.

Another embodiment of the lens is further characterized in that the refractive index of the lens material exhibits a specific gradient from the lens outer surface towards its inner surface. In accordance with a further characteristic feature of the monomode transmission fibre the lowest refractive index of the lens material is approximately 1,9 and the refractive index of the fibre core is approximately 1,5.

The material with the spherical surface may be deposited on a round end of the tapered fibre. A preferred embodiment of the monomode transmission fibre is further characterized in that the lens element is deposited on a flat end face of the taper of the transmission fibre.

It is to be noted that it is known *per se* to arrange a plano-convex lens on a flat end face of a transmission fibre, both from the afore-mentioned DE—A—25 35 161 and from DE—A—26 36 632. However, the last-mentioned Patent Application describes a transmission fibre whose core has a non-tapered end portion instead of a tapered end portion. Moreover, this Patent Application states that the refractive index of the lens is preferably smaller than that of the fibre material.

A further aspect of the invention concerns the method of manufacturing the monomode transmission fibre. As described in the aforementioned article in "Applied Optics", Vol. 19, No. 15, pages 2578—2583, a monomode optical transmission fibre with a tapered end portion can be obtained by stretching a straight transmission fibre in an arc discharge until it fractures. The monomode transmission fibre in accordance with the invention may be obtained by the method as defined in claim 7.

Preferably a flat end face is formed on said tapered end portion before the tapered end portion is immersed into the liquid material.

The invention will now be described in more detail, by way of example, with reference to the drawing, in which

Figure 1 shows a known monomode transmission fibre having a tapered end portion,

Figure 2 illustrates the inventive method of forming a lens on a tapered fibre end portion,

Figures 3a, 3b and 3c show different embodiments of a transmission fibre obtained by means of said method, and

Figure 4 illustrates how a transmission fibre with a tapered end portion provided with a flat end face can be obtained.

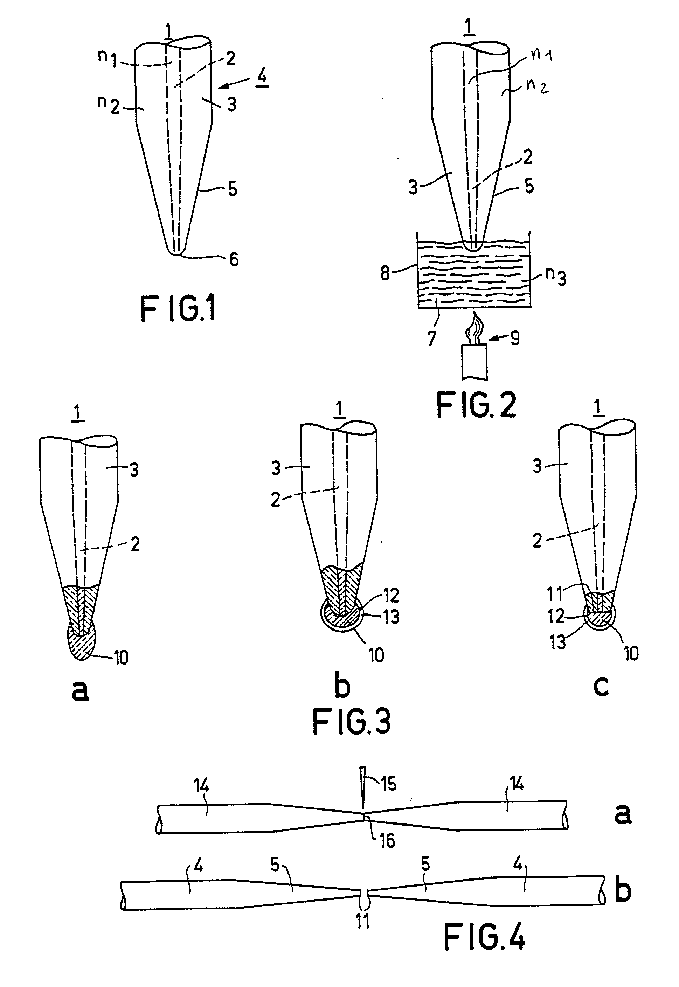

The known transmission fibre 1 shown in Figure 1 comprises a core 2 and a cladding 3. The refractive index of the core material is slightly different from that of the cladding material, so that most part of the light entering fibre core is guided through the core *via* the mechanism of total reflection from the core-to-cladding interfaces. The refractive index $n_2$ of the cladding material is for example 1.5, and the refractive index $n_1$ of the core material is, for example, approximately 0.3% higher. The transmission fibre described here is a monomode fibre, which means that only radiation of a specific mode can propagate in the fibre core. In such a fibre the core diameter is substantially smaller than the cladding diameter. For example, the core diameter is approximately 7 μm, and the cladding diameter is approximately 125 μm.

Most part 4 of the transmission fibre (1) is straight. The end portion 5, however, has a tapered core and cladding and has a rounded top 6. The rounded top (6) is obtained automatically when stretching a straight transmission fibre in an arc discharge until the straight fibre breaks. The shape of the tapered portion and the radius of the rounded top 6 are determined by the speed of stretching. The round top has a radius of, for example, 12.5 μm and exhibits a lens action.

In accordance with the invention, in order to increase the coupling efficiency, a lens having a high refractive index is arranged on the tapered end portion 5 (of short length) of the fibre. A lens having a high refractive index generally has a large numeral aperture and a low spherical aberration. This lens is formed by immersing the end portion 5 in a liquid or viscous material 7, as is schematically shown in Figure 2. The material 7 is suitably a glass which has been melted in a crucible 8, as is schematically indicated by the flame 9. The glass is a soft glass, so that the fibre end 5 is not deformed upon immersion. The material 7 has a refractive index $n_3$ which is higher than that of the fibre-core material. A satisfactory result is obtained by depositing glass with a refractive index $n_3=1.9$ on a fibre with $n_2=1.5$. The glass is for example of the type SF 59. A type of glass must be chosen whose refractive index does not decrease substantially during softening and subsequent cooling.

When the fibre end is withdrawn from the crucible a part of the material 7 will adhere to the fibre. As a result of the surface tension this amount of material will adopt a specific drop shape, designated 10 in Figures 3a, 3b and 3c, at a specific viscosity. The dimensions and the shape of this drop can be inflenced by the immersion depth and the temperature of the material 7 in the crucible 8. Moreover, the shape of the end portion 5 of the fibre will also determine the shape of the drop 10.

After the fibre end 5 with the drop 10 has been withdrawn from the material 7, the drop 10, if it is made of glass, is allowed to cool. In this way a lens 10 is formed on the fibre end.

Figures 3a, 3b and 3c show embodiments of a transmission fibre with such a lens. Figure 3a shows a transmission fibre with a comparatively long lens 10, which is obtained by immersing the fibre end comparatively deep into the crucible 8. The lens 10 may also be formed in layers, the fibre being immersed several times in the crucible 8 and the material being allowed to cool between two consecutive immersions.

Figure 3b shows an embodiment with a comparatively thin lens which is obtained by immersing only a small portion of the fibre end in the crucible.

Finally, Figure 3c shows a preferred embodiment. The lens 10 is now formed on a flat end face 11 of the transmission fibre. In order to obtain such a flat end face (11) the fibre shown in Figure 1, which is manufactured in known manner, is cut at a specific height of the tapered portion 5.

The upper part of Figure 4 very schematically illustrates a method which is preferably used in order to obtain a tapered transmission fibre with a flat end face. Again a straight transmission fibre is used, which is first stretched over a specific length. In the fibre 14 thus obtained a scratch 16 is made by means of a scriber 15 of a circle-cutting apparatus. Subsequently, the fibre 14 is stretched further until it breaks, the fracture surface being a flat surface at the location of the scratch. Thus, two tapered fibres 4 with flat end faces are obtained, as shown in the lower part of Figure 4.

When the straight transmission fibre is stretched it is possible to pull at both ends of this fibre. However, it has been found that a better result is obtained if one end of the straight fibre is immobilised and only the other end of the fibre is pulled. Of the fibre portions obtained after fracture of the straight fibre the immobilised portion has a substantially shorter tapered end portion (for example 125 microns) than the fibre portion which has been pulled at. The transmission fibre with a shorter tapered end portion has a higher coupling efficiency than a transmission fibre with a longer tapered end portion. It is therefore this shorter tapered end portion which is further used for manufacturing the monomode transmission fibre of the present invention.

The lens which is obtained by the method illustrated in Figure 2 is made of a homogeneous material with a comparatively high refractive index. The surface of this lens can reflect a part of the incident light. In order to reduce the reflection losses an anti-reflection coating 13 may be applied to the outer surface 12 of the lens 10, as is shown in Figures 3b and 3c. The reflection loss may also be reduced by giving the refractive index of the lens 10 a specific variation. For this purpose the lens 10 may for example be immersed in a salt solution which gives rise to ion exchange between the lens and the salt solution, so that a graded-index lens is obtained. The lowest refractive index in the lens 10 is then still substantially higher than the refractive index of the transmission-fibre core.

In a practical embodiment of a transmission fibre having a core diameter of approximately 7 μm, a cladding diameter of approximately 125 μm and a refractive index of approximately 1.5, which transmission fibre has a short tapered end portion with a flat end face on which a graded-index lens having a diameter of approximately 30 μm and a lowest refractive index of approximately 1.9 has been deposited, a coupling efficiency of more than 60% was achieved.

**Claims**

1. A monomode optical transmission fibre (1) having at one of its ends a conical taper (5) with continuously decreasing cross-section, comprising a tapered core surrounded by a tapered cladding, characterized in that the length of the tapered end portion (5) is of the order of magnitude of the diameter of the non-tapered fibre portion (4) and that on top of the taper (5) is deposited a lens element (10) having a spherical top surface and comprising a transparent material with a refractive index higher than that of the transmission fibre core.

2. A monomode optical transmission fibre as claimed in claim 1, characterized in that the lens material is glass.

3. A monomode optical transmission fibre as claimed in claim 1 or 2, the lens material being homogeneous, characterized in that an anti-reflection coating (13) is deposited on the lens outer surface.

4. A monomode optical transmission fibre as claimed in claim 1 or 2, characterized in that the refractive index of the lens material exhibits a specific gradient from the lens outer surface towards its inner surface.

5. A monomode optical transmission fibre as claimed in claim 1, 2, 3 or 4, characterized in that the lowest refractive index of the lens material is approximately 1,9 and the refractive index of the fibre core is approximately 1,5.

6. A monomode optical transmission fibre as claimed in any of the preceding claims, characterized in that the lens element is deposited on a flat end face (11) of the taper (5) of the transmission fibre.

7. A method of manufacturing a monomode optical transmission fibre (1) having at one of its ends a conical taper (5) with continuously decreasing cross section comprising a tapered core surrounded by a tapered cladding, and having deposited on top of the taper (5) a lens element (10) with a spherical top surface and comprising a transparent material the refractive index of which is higher than that of the transmission fibre core, the method comprising the steps of: stretching in an arc discharge a straight monomode transmission fibre (14) until it fractures so that two fibres (4) with a taper (5) are obtained, only one end of the transmission fibre (14) being pulled at during said stretching so that one of the two tapered end portions (5) thus obtained is substantially shorter than the other tapered end portion; subsequently immersing the shorter tapered end portion in a liquid transparent material (17) having a refractive index which is higher than that of the fibre core withdrawing the shorter tapered end portion from the liquid material (7); and, finally allowing the material which adheres to the withdrawn shorter tapered end portion to solidify until it has adopted a stable lens shape (10).

8. A method as claimed in claim 7, characterized in that a flat end face (11) is formed on the shorter tapered end portion before said end portion of the transmission fibre is immersed into the liquid material.

9. A method as claimed in claim 8, characterized in that a tapered fibre with a flat end face (11) is obtained by first stretching a straight transmission fibre, subsequently making a circular scratch (16) on said fibre and finally stretching the fibre further until it fractures at the location of the scratch.

**Patentansprüche**

1. Optische Monomode-Übertragungsfaser (1) mit einem konusförmigen Endteils (5) mit stetig abnehmendem Querschnitt an einer ihrer Enden, der von einer konusförmigen Verkleidung umgebenen konusförmigen Kern enthält, dadurch gekennzeichnet, daß die Länge des konusförmigen Endteils (5) in der Größenordnung des Durchmessers des nicht konusförmigen Faserteils (4) ist, und daß auf der Kuppe des Konus (5) ein Linsenelement (10) mit einer sphärischen oberen Fläche abgelagert ist und ein transparentes Material mit einem Brechungsindex enthält, der höher als der des Übertragungsfaserkerns ist.

2. Optische Monomode-Übertragungsfaser nach Anspruch 1, dadurch gekennzeichnet, daß das Linsenmaterial Glas ist.

3. Optische Monomode-Übertragungsfaser nach Anspruch 1 oder 2, wobei das Linsenmaterial homogen ist, dadurch gekennzeichnet, daß eine Antireflexionsverkleidung (13) auf der äußeren Linsenoberfläche abgelagert ist.

4. Optische Monomode-Übertragungsfaser nach Anspruch 1 oder 2, dadurch gekennzeichnet, daß der Brechungsindex des Linsenmaterials einen spezifischen Gradienten von der äußeren Linsenoberfläche nach ihrer inneren Oberfläche aufweist.

5. Optische Monomode-Übertragungsfaser nach Anspruch 1, 2, 3 oder 4, dadurch gekennzeichnet, daß der niedrigste Brechungsindex des Linsenmaterials etwa 1,9 und der Brechungsindex des Faserkernes etwa 1,5 beträgt.

6. Optische Monomode-Übertragungsfaser nach einem oder mehreren der vorangehenden Ansprüche, dadurch gekennzeichnet, daß das Linsenelement auf einer ebenen Endfläche (11) des konusförmigen Endteils (5) der Übertragungsfaser abgelagert ist.

7. Verfahren zur Herstellung einer optische Monomode-Übertragungsfaser (1) mit einem konusförmigen Enteil (5) mit stetig abnehmendem Querschnitt an einer ihrer Enden, mit einem von einer konusförmigen Verkleidung umgebenen konusförmigen Kern, und wobei auf der Kuppe des Konus (5) ein Linsenelement (10) mit einer sphärischen oberen Fläche abgelagert ist und welches ein transparentes Material enthält, dessen Brechungsindex höher als der des Übertragungsfaserkerns ist, wobei das Verfahren folgende Schritte enthält: Strecken einer geraden Monomode-Übertragungsfaser (14) in einer Bogenentladung, bis sie bricht, so daß zwei Fasern (4) mit einem konusförmigen Endteil (5) erhalten werden, wobei nur ein Ende der Übertragungsfaser (14) beim Strecken gezogen wird, so daß einer der zwei auf diese Weise erhaltenen konusförmigen Endteile (5) im wesentlichen kürzer als der andere konusförmige Endteil ist; Eintauchen des kürzeren konusförmigen Endteils danach in ein flüssiges transparentes Material (7) mit einem Brechungsindex höher als der des Faserkerns; Zurückziehen des kürzeren konus-förmigen Enteils aus dem flüssigen Material (7); und schließlich zum Ermöglichen des Erstarrens des auf dem zurückgezogenen, kürzeren, konusförmigen Endteil zurückbleibenden Materials, bis es eine stabile Linsenform (10) erhalten hat.

8. Verfahren nach Anspruch 7, dadurch gekennzeichnet, daß eine ebene Endfläche (11) auf dem kürzeren konusförmigen Endteil gebildet wird, bevor dieser Endteil der Übertragungsfaser in das flüssige Material eingetaucht wird.

9. Verfahren nach Anspruch 8, dadurch gekennzeichnet, daß eine konusförmige Faser mit einer ebenen Endfläche (11) durch erstes Strecken einer geraden Übertragungsfaser erhalten wird, wonach ein kreisförmiger Kratzer (16) auf der Faser angebracht wird und schließlich die Faser weiter gestreckt wird, bis sie zur Stelle des Kratzers abbricht.

**Revendications**

1. Fibre de transmission optique monomode (1) présentant à l'une de ses extrémités une partie terminale conique (5) dont la section transversale diminue de façon continue, et comportant une âme se terminant en cône et entourée d'une gaine se terminant en cône, caractérisée en ce que la longueur de la partie terminale conique (5) est de l'ordre de grandeur du diamètre de la partie de fibre non conique (4) et en ce qu'au sommet de la partie terminale conique (5), est déposé un élément de lentille (10) ayant une surface de sommet sphérique et constitué par un matériau transparent d'indice de réfraction supérieur à celui de l'âme de la fibre de transmission.

2. Fibre de transmission optique monomode selon la revendication 1, caractérisée en ce que le matériau de la lentille est du verre.

3. Fibre de transmission optique monomode selon la revendication 1 ou 2, le matériau de la lentille étant homogène, caractérisée en ce qu'un revêtement anti-reflet 13 est déposé sur la surface extérieure de la lentille.

4. Fibre de transmission optique monomode selon la revendication 1 ou 2, caractérisée en ce que l'indice de réfraction du matériau de la lentille présente un gradient déterminé à partir de la surface extérieure de la lentille vers sa surface intérieure.

5. Fibre de transmission optique monomode selon la revendication 1, 2, 3 ou 4, caractérisée en ce que l'indice de réfraction le plus faible du matériau de la lentille est de l'ordre de 1,9 et l'indice de réfraction de l'âme de la fibre est de l'ordre de 1,5.

6. Fibre de transmission optique monomode selon l'une quelconque des revendications précédentes, caractérisée en ce que l'élément de lentille est déposé sur une face terminale plate (11) de la partie terminal conique (5) de la fibre de transmission.

7. Procédé de fabrication d'une fibre de transmission optique monomode (1) ayant à l'une de ses extrémités une partie terminale conique (5) dont la section transversale diminue de façon continue et qui comporte une âme se terminant en cône et entourée d'une gaine se terminant en cône, partie terminale conique (5) au sommet de laquelle est déposé un élément de lentille (10) présentant une surface de sommet sphérique et constitué par un matériau transparent d'indice de réfraction supérieur à celui de l'âme de la fibre de transmission, procédé comportant les étapes consistant à étirer dans une décharge en arc une fibre de transmission monomode droite (14) jusqu'à ce qu'elle se casse, de sorte qu'un obtient deux fibres (4) présentant une partie terminale conique (5), seule l'une des extrémités de la fibre de transmission (14) étant soumise à une traction au cours de cet étirage, de sorte que l'une des deux parties terminales coniques (5) ainsi obtenue a une longueur sensiblement plus faible que l'autre partie terminale conique, à plonger ensuite la partie terminale conique ayant la longueur la plus faible dans une matière transparente liquide (17) ayant un indice de réfraction supérieur à celui de l'âme de la fibre, à retirer la partie terminale conique la plus courte de la matière liquide (7) et, finalement, à laisser solidifier la matière adhérant à la partie terminale la plus courte retirée jusqu'à ce qu'elle ait pris une forme de lentille stable (10).

8. Procédé selon la revendication 7, caractérisé en ce qu'on forme une face terminale plate (11) sur la partie terminale conique la plus courte avant de plonger cette partie terminale de la fibre de transmission dans la matière liquide.

9. Procédé selon la revendication 8, caractérisé en ce qu'on réalise une fibre se terminant en cône et présentant une face terminale plate (11) en étirant d'abord une fibre de transmission droite, en pratiquant ensuite une rayure circulaire (16) dans cette fibre et en poursuivant finalement l'étirage de la fibre jusqu'à ce qu'elle se casse à l'endroit de la rayure.

FIG.1

FIG.2

FIG.3

a

b

c

FIG.4

a

b